# EUROPÄISCHE PATENTSCHRIFT

(11) **EP 1 526 036 B1**
(45) Veröffentlichungstag und Bekanntmachung des Hinweises auf die Patenterteilung: **08.04.2009**
(21) Anmeldenummer: 04022566.6
(22) Anmeldetag: 22.09.2004
(51) Int. Cl.: B60P 1/26, B62D 33/037, B62D 33/027, B60P 1/273

(54) **Kippvorrichtung eines Kipperfahrzeugs**
Tipping device for a tipping load vehicle
Dispositif de basculation pour un camion-benne

(30) Priorität: 20.10.2003 DE 10348605
(43) Veröffentlichungstag der Anmeldung: 27.04.2005
(73) Patentinhaber: Franz Xaver Meiller Fahrzeug- und Maschinenfabrik-GmbH & Co KG, 80997 München (DE)
(72) Erfinder: Meissner, Uwe, Dipl.-Ing. (FH), 85560 Ebersberg (DE)
(74) Vertreter: Tiesmeyer, Johannes

(56) Entgegenhaltungen:
- DE-A1- 4 417 766
- DE-A1- 19 940 811
- DE-U- 29 507 084
- US-A- 4 307 541
- US-B1- 6 572 197

## Beschreibung

Die Erfindung betrifft eine Kippvorrichtung eines Kipperfahrzeugs, mit einem Kippaufbau und einer hydraulischen Kippantriebseinrichtung zum Schwenken des Kippaufbaus um eine normalerweise horizontale Kippachse, wobei der Kippaufbau einen Rahmen und daran wenigstens eine zum Schließen und Öffnen eines Ausschüttbereiches des Kippaufbaus um eine Schwenkachse schwenkbare Bordwandklappe, insbesondere Heckwandklappe, und ferner eine die Bordwandklappe in deren Schließstellung verriegelnde Verriegelungseinrichtung aufweist, wobei als Schwenkantriebsvorrichtung für die Bordwandklappe wenigstens eine hydraulische Zylinder-Kolben-Einheit vorgesehen ist, mittels derer auch die Verriegelungseinrichtung betätigbar ist, um die Bordwandklappe aus ihrer Verriegelung freizugeben, wobei die Zylinder-Kolben-Einheit über eine Steuerventilanordnung mit Druck aus einem einem der Bordwandklappenbetätigung zugeordneten hydraulischen Kreis beaufschlagbar ist, um einen die Öffnungsbewegung der Bordwandklappe auslösenden Kolbenhub der Zylinder-Kolben-Einheit zu erzeugen.

Eine Kippvorrichtung der vorstehend genannten Art ist z.B. aus der DE 199 40 811 A1 bekannt.

Ziel der Erfindung ist es, bei einer solchen Kippvorrichtung mit einfachen Mitteln dafür zu sorgen, dass der Vorgang der Entriegelung der Bordwandklappe, insbesondere bei Einleitung eines Kippvorgangs des Kippaufbaus zuverlässig und störungsfrei ablaufen kann.

Zur Lösung dieser Aufgabe wird ausgehend von einer Kippvorrichtung der eingangs genannten Art erfindungsgemäß vorgeschlagen, dass die Zylinder-Kolben-Einheit über einen zumindest dem Entriegelungsvorgang der Verriegelungseinrichtung entsprechenden begrenzten Bereich ihres Kolbenhubs mit einem erhöhten Druck aus einem hydraulischen Hilfskreis beaufschlagbar ist.

Der der Bordwandklappenbetätigung zugeordnete hydraulische Kreis ist bei den Kippvorrichtungen der eingangs genannten Art normalerweise so dimensioniert, dass er die Zylinder-Kolben-Einheit mit einem für das Verschwenken der Bordwandklappe und unter Normalbedingungen auch für das Entriegeln der Bordwandklappe hinreichend hohen Druck versorgen kann. Üblicherweise sind zwei gleichartige Zylinder-Kolben-Einheiten für die Bordwandklappenbetätigung an den einander gegenüberliegenden Seiten des Kippaufbaus zwischen dem Kippaufbaurahmen und Schwenkhalterungen der Bordwandklappe vorgesehen. Aus Platzgründen sollten die Zylinder-Kolben-Einheiten möglichst klein sein. Dies bedingt jedoch, dass sie normalerweise nur mit begrenztem hydraulischem Druck betrieben werden können. Es hat sich in der Vergangenheit bei konventionellen Kippvorrichtungen der hier betrachteten Art gezeigt, dass die hydraulischen Zylinder-Kolben-Einheiten die Bordwandklappe nicht in allen Belastungssituationen zuverlässig entriegelten. Eine solche Belastungssituation kann gegeben sein, wenn der Kippaufbau mit schwerem Schüttgut beladen ist und die Ladung so auf die Bordwandklappe drückt, dass die Verriegelungselemente der Verriegelungseinrichtung aneinander klemmen. Bisherige Versuche, dieses Problem zu überwinden, liefen darauf hinaus, größer dimensionierte Zylinder-Kolben-Einheiten zu verwenden und in entsprechender Weise auch den Hydraulikkreis für die Bordwandklappenbetätigung stärker zu dimensionieren. Derartige Maßnahmen sind jedoch kontraproduktiv im Hinblick auf das Ziel, möglichst platzsparende und somit kleine Zylinder-Kolben-Einheiten und möglichst preiswerte Hydraulikkomponenten zu deren Betrieb vorzusehen.

Gemäß der vorliegenden Erfindung wird jedoch ein neuer Weg aufgezeigt, wie eine zuverlässig Entriegelung der Bordwandklappe auch unter extremen Belastungszuständen der Klappe sichergestellt werden kann, ohne die Zylinder-Kolben-Einheiten über das ihrem normalen Anforderungsprofil entsprechende Maß hinaus wesentlich überdimensionieren zu müssen.

Wie schon erwähnt, besteht der Lösungsansatz daran, im Wesentlichen nur für den Entriegelungsvorgang der Bordwandklappe Druck aus dem hydraulischen Hilfskreis bereitzustellen. Da der Entriegelungsvorgang bereits abgeschlossen ist, nachdem der Kolben der Zylinder-Kolben-Einheit einen vergleichsweise kleinen begrenzten anfänglichen Kolbenhub ausgeführt hat, erfolgt die Beaufschlagung der hydraulischen Zylinder-Kolben-Einheit mit dem erhöhten Druck des Hilfskreises normalerweise nur kurzzeitig und auch nur während des anfänglichen Bereichs des Kolbenhubs. Eine derartige Sicherheitslösung ist mit geringem Aufwand realisierbar.

Bei den hier betrachteten Kippvorrichtungen sollte sichergestellt sein, dass die Bordwandklappe entriegelt wird, wenn der beladene Kippaufbau in eine Kippstellung verschwenkt wird. Sollte die Bordwand dabei starr verriegelt bleiben, so könnte sich die Ladung, etwa Schüttgut, an der verschlossenen Bordwand stauen und somit eine gefährliche Gewichtsverlagerung des mit der Kippvorrichtung ausgerüsteten Kipperfahrzeugs herbeiführen.

Bei entriegelter Bordwand kann die Ladung beim Kippen des Kipperaufbaus normalerweise am Ausschüttbereich den Kippaufbau verlassen, so dass die vorstehend angesprochene gefährliche Situation einer kritischen Gewichtsverlagerung nicht eintreten sollte. Demgemäß wird vorgeschlagen, dass die Kippvorrichtung Steuerungsmittel aufweist, die dazu eingerichtet sind, mit dem Einleiten des Kippens des Kippaufbaus aus der Fahrbetriebsgrundstellung heraus automatisch den hydraulischen Hilfskreis zur Beaufschlagung der Zylinder-Kolben-Einheit zu aktivieren.

Gemäß einer bevorzugten Ausführungsform der Erfindung weist die Verriegelungseinrichtung wenigstens ein am Kippaufbaurahmen in der Nähe des Ausschüttbereiches befestigtes Verriegelungselement auf, welches ein Verriegelungsgegenelement der Bordwandklappe in deren Schließstellung verriegelnd hintergreift, wobei die Verriegelung durch Anheben der Bordwandklappe lösbar ist. Die Bordwandklappe ist in der Nähe ihres in der Schließstellung oberen Endes an einer Schwenkhalterungsanordnung angehängt, welche ausgehend von einer mit der Schließstellung der Bordwandklappe korrespondierenden Stellung mittels der Zylinder-Kolben-Einheit um die Schwenkachse schwenkbar ist, um die Bordwandklappe aus ihrer Schließstellung heraus durch Anheben zu entriegeln und in eine Öffnungsstellung zu verschwenken.

Vorzugsweise ist die Zylinder-Kolben-Einheit in einer Entriegelungsbetriebsart so ansteuerbar, dass sie im Wesentlichen nur den zur Entriegelung der Bordwandklappe begrenzten Kolbenhub ausführt, wobei die auf diese Weise entriegelte Bordwandklappe an der Schwenkhalterungsanordnung um eine zur Kippachse parallele Achse pendeln kann, wenn der Kippaufbau in eine angehobene Kippstellung verschwenkt wird. Die Bordwandklappe wird bei dem Pendelvorgang aufgrund ihrer Schwerkraft zur Einnahme ihrer vertikal ausgerichteten Stellung tendieren. Beim Entladen von Schüttgut kann die pendelnde Bordwand einen dosierenden Effekt auf das Entladen haben, da sie den Ausschüttbereich nicht völlig freigibt. Von einem solchen Dosiereffekt wird z.B. Gebrauch gemacht, wenn ein Kipperfahrzeug in Kombination mit einem Straßenfertiger beim Aufbringen eines Straßenbelages betrieben wird, wobei ein kontinuierlicher Fluss des Ladegutes des Kipperfahrzeugs aus dem in Kippstellung gebrachten Kippaufbau in einen Trichter des dem Kipperfahrzeug folgenden Straßenfertigers erfolgen soll.

Gemäß einer bevorzugten Weiterbildung der Erfindung ist der hydraulische Hilfskreis an der Druckseite einer Pumpe zur hydraulischen Versorgung der Kippantriebsvorrichtung angeschlossen. Der Hilfskreis ist somit von dem hydraulischen Kreis zum Betrieb der Kippantriebseinrichtung, also etwa zur Versorgung eines ggf. teleskopierbaren Kippzylinders abgezweigt. Der Hydraulikkreis der Kippantriebseinrichtung ist so dimensioniert, dass über den hydraulischen Hilfskreis ein hinreichend hoher Druck für den Entriegelungsvorgang der Bordwandklappe abgezweigt werden kann.

In Ausführungsvarianten der Erfindung können die Druckfluidquellen des hydraulischen Hilfskreises und des hydraulischen Hauptkreises für die Bordwandklappenbetätigung verschiedene Pumpen umfassen oder ggf. auf eine gemeinsame Pumpe zurückgehen.

In dem hydraulischen Hilfskreis ist gemäß einer besonders bevorzugten Ausführungsform der Erfindung ein vorzugsweise hydraulisch übersetzender Druckübertragungszylinder enthalten. Dieser Druckübertragungszylinder hat insbesondere die Funktion, die aus dem hydraulischen Hilfskreis für den Entriegelungsvorgang der Bordwandklappe bereitgestellte Druckfluidmenge auf einen vorbestimmten Wert zu begrenzen. Vorzugsweise hat dieser Druckübertragungszylinder eine große hydraulische Übersetzung, so dass auch auf diese Weise ein für den Entriegelungsvorgang ausreichend hoher Druck an der hydraulischen Zylinder-Kolben-Einheit erzeugt werden kann. Gemäß einer Variante der Ausführungsform der Erfindung mit Druckübertragungszylinder ist dieser innen von einem einseitig eine Kolbenstange aufweisenden Kolben in zwei Zylinderkammern unterteilt, wobei die von der Kolbenstange durchsetzte Zylinderkammer hydraulisch mit der Zylinder-Kolben-Einheit für die Entriegelung und für den Schwenkantrieb der Bordwandklappe in Verbindung steht, wohingegen die andere Zylinderkammer ggf. über eine Ventilanordnung an einer Druckfluid fördernden Pumpe angeschlossen ist, wobei der Druckübertragungszylinder so dimensioniert ist, dass die von ihm bei vollständigem Maximalhub seines Kolbens zu der Zylinder-Kolben-Einheit verdrängte Druckfluidmenge ausreicht, um bei der Zylinder-Kolben-Einheit einen im Wesentlichen auf den Entriegelungsvorgang der Verriegelungseinrichtung begrenzten Kolbenhub zu verursachen. Der Kolben hat wegen der Kolbenstange unterschiedlich große axial beaufschlagte Flächen an der Grenze zu den Zylinderkammern, so dass er hydraulisch übersetzen kann.

Zwar sollte bei einer Ausführungsform der Kippvorrichtung nach der Erfindung mit hydraulischen Mitteln dafür gesorgt sein, dass die Kolbenstange des Druckübersetzungszylinders stets in die eingezogene Grundstellung zurückgeführt wird, wenn der Kippaufbau aus seiner Kippstellung heraus wieder in seine abgesenkte Fahrbetriebsgrundstellung verschwenkt wird. Als zusätzliche Sicherungsmaßnahme kann es im Rahmen der Erfindung vorgesehen sein, dass der Druckübertragungszylinder so an einem Fahrzeugrahmenteil oder dazu ortsfest angeordnet ist, dass er mechanisch von dem Kippaufbau in Eingriff genommen werden kann, um die Kolbenstange in die eingezogene Grundstellung im Druckübertragungszylinder zu überführen, wenn der Kippaufbau aus seiner angehobenen Kippstellung in die Fahrbetriebsgrundstellung übergeht.

Die Erfindung wird anhand eines Ausführungsbeispiels unter Bezugnahme auf die Figuren näher erläutert.
- Fig. 1: zeigt in einer Perspektivdarstellung den Heckbereich eines Kippaufbaus, bei dem es sich im Beispielsfall um eine als Kippmulde ausgebildete Kippbrücke handelt, wobei die Bordwand mit durchgezogenen Linien in der Schließstellung gezeigt ist, wohingegen mit unterbrochenen Linien angedeutet ist, wie die Bordwandklappe in ihrer Stellung maximaler Öffnung des Ausschüttbereichs des Kippaufbaus orientiert ist.
- Fig. 2a-2d: zeigen in stark vereinfachten schematischen Darstellungen einen Kippaufbau der in Fig. 1 gezeigten Art mit verschiedenen Stellungen der Bordwandklappe.
- Fig. 3: zeigt ein stark vereinfachtes Hydraulik-Schaltbild zur Erläuterung der hydraulischen Betätigung der Bordwandklappe.
- Fig. 4: zeigt ein stark vereinfachtes Hydraulikschaltbild eines im Vergleich mit Fig. 3 abgewandelten Ausführungsbeispiels.

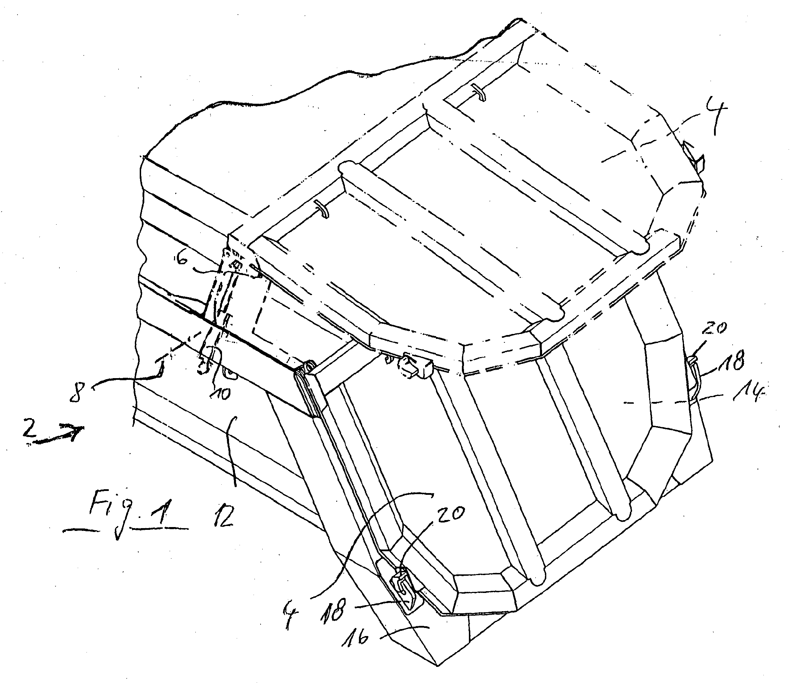

Bei dem als Kippmulde ausgebildeten Kippaufbau 2 in Fig. 1 ist eine Heckwandklappe 4 an Schwenkhalterungsarmen 6 hängend in der nachstehend noch näher erläuterten Weise befestigt. Die Schwenkhalterungsarme 6 sind um eine bei 8 angedeutete Achse zwischen der in Fig. 1 mit durchgezogenen Linien dargestellten ersten Stellung, die mit der Schließstellung der Bordwandklappe 4 korrespondiert, und einer in Fig. 1 mit unterbrochenen Linien dargestellten zweiten Stellung verschwenkbar.

Als Schwenkantriebsglieder sind hydraulische Zylinder-Kolben-Einheiten 10 vorgesehen, welche mit ihrem Zylinderende im oberen Bereich der Seitenwand 12 innen am Kippaufbaurahmen - und mit ihrem Kolbenstangenende an den Schwenkhalterungsarmen 6 gelenkig befestigt sind.

Die Bordwandklappe 4 verschließt in ihrer Schließstellung den heckseitigen Ausschüttbereich 14 des Kippaufbaus 2.

An dem diesen Ausschüttbereich 14 begrenzenden Rahmen 16 des Kippaufbaus 2 ist ein im Beispielsfall klauenförmiges Verriegelungselement 18 fixiert, welches in der gezeigten Weise ein Verriegelungsgegenelement 20 der in Schließstellung befindlichen Bordwandklappe 4 verriegelnd hintergreift. Die Bordwandklappe 4 ist somit gesichert, um den Ausschüttbereich 14 zuverlässig zu verschließen.

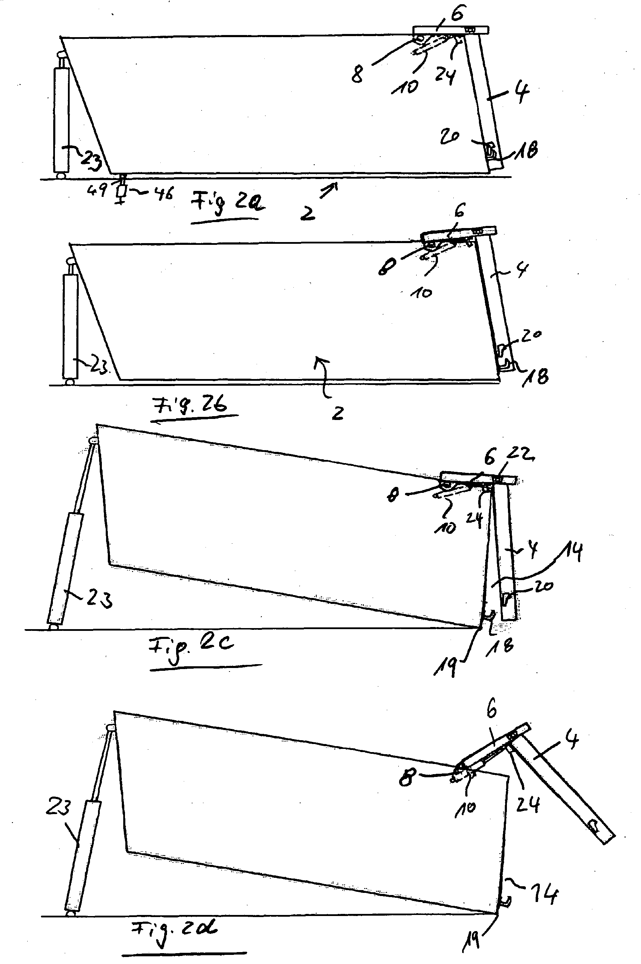

Die Schließstellung der Bordwandklappe 4 ist auch in der vereinfachten Darstellung gemäß Fig. 2a zu erkennen. In den Fig. 2a-2d ist ferner erkennbar, dass die Bordwandklappe 4 an dem von der Schwenkachse 8 nach hinten abstehenden Schwenkhalterungsarm so angelenkt ist, dass sie durch Verschwenken des Schwenkhalterungsarms 6 eine Hubbewegung (vgl. den Wechsel zwischen Fig. 2a und 2b) ausführen kann, bei der das Verriegelungsgegenelement 20 der Bordwandklappe 4 von dem Verriegelungselement 18 freikommt. Wird der Schwenkvorgang der Schwenkhalterungsarme 6 in diesem Zustand der Bordwandklappe 4 gestoppt, so kann die entriegelte Bordwandklappe 4 um die Pendelachse 22 (vgl. Fig. 2c) pendeln, wenn der Kippaufbau um die Kippachse 19 gekippt wird, wobei sie die in Fig. 2c gezeigte Vertikalstellung anstreben wird und daran ggf. durch Schüttgut gehindert wird, welches im Ausschüttbereich 14 von dem Kippaufbau 2 abfließt.

Bei einem weiteren Verschwenken der Schwenkhalterungsarme 6 - ausgehend von der Stellung gemäß Fig. 2b oder Fig. 2c - kommt es aufgrund der Wirkung eines Anschlags 24 zwischen dem Schwenkhalterungsarm 6 und der Bordwandklappe 4 dazu, dass die Bordwandklappe 4 in der in Fig. 2d gezeigten Weise von dem Ausschüttbereich 14 abgehoben wird, so dass der Kippaufbau 2 heckseitig nunmehr nahezu vollständig offen ist.

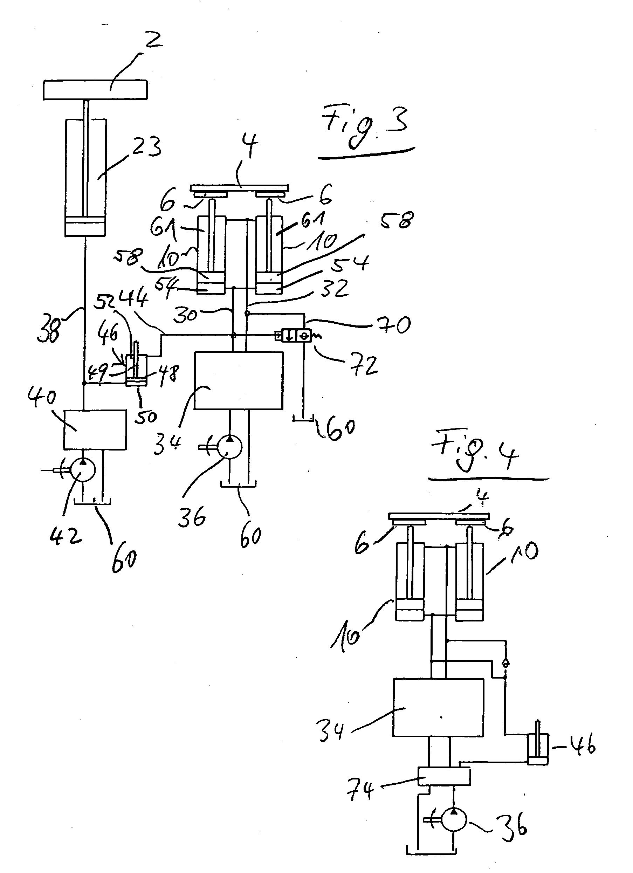

In Fig. 3 ist ein vereinfachter Hydraulikschaltplan gezeigt, anhand dessen der Entriegelungs- und Schwenkbetrieb der Bordwandklappe 4 im Folgenden näher erläutert wird.

Mit 10 sind in Fig. 3 die doppelt wirkenden hydraulischen Zylinder-Kolben-Einheiten für die Betätigung der Bordwandklappe 4 gekennzeichnet. Sie sind über Hydraulikleitungen 30, 32 mit einem Steuerventilblock 34 zur Steuerung des Druckfluidflusses von der Pumpe 36 zu den Zylindern 10 und zur Steuerung des Druckfluidabflusses von den Zylindern 10 zu einem Tank 60 verbunden.

Die Ventileinstellung des Steuerventilblocks 34 erfolgt mittels einer (nicht gezeigten) pneumatischen Stelleinrichtung nach Maßgabe der Bedienung einer z.B. in einem Fahrerhaus des Kipperfahrzeugs vorgesehenen Bedieneinrichtung, etwa eines Schalthebels. Mit 23 ist in Fig. 3 der Kippzylinder der Kippantriebseinrichtung für den Kippaufbau bezeichnet. Der einfach wirkende Kippzylinder 23 ist über die Hydraulikleitung 38 mit dem Kippventilblock 40 zur Steuerung des Druckfluidflusses von der Pumpe 42 zum Kippzylinder 23 und zur Steuerung des Rückflusses vom Kippzylinder 23 zum Tank 60 verbunden. In einer die Hydraulikleitung 38 mit der Hydraulikleitung 30 verbindenden Hilfskreisleitung 44 ist ein Druckübertragungszylinder 46 vorgesehen, dessen Zylinderraum von einem Kolben 48 in zwei Zylinderkammern 50, 52 unterteilt wird. Die an der Hydraulikleitung 30 angeschlossene Zylinderkammer 52 ist von der Kolbenstange 49 des Kolbens 48 durchsetzt. Die kolbenstangenfreie Zylinderkammer 50 ist an der Druckfluidleitung 38 angeschlossen. Der Druckübertragungszylinder 46 stellt ein hydraulisches Übersetzungselement dar, welches zur Wirkung kommt, wenn der Kolben 48 bei Druckbeaufschlagung in der Zylinderkammer 50 einen Kolbenhub ausführt. Dabei überträgt er den hohen Druck zu der Hydraulikfluidleitung 30 und somit zu den in Fig. 3 kolbenstangenfreien Zylinderkammern 54 der Zylinder-Kolben-Einheiten 10. Da die Druckfluidzufuhr zu der Zylinderkammer 50 des Druckübertragungszylinders 46 immer dann erfolgt, wenn auch der Kippzylinder 23 mit Druckfluid von der Pumpe 42 versorgt wird, kommt es zur Beaufschlagung der Zylinderkammern 54 der Zylinder-Kolben-Einheiten 10 stets bei Einleitung des Kippvorgangs des Kippaufbaus 2. Der Steuerventilblock 34 ist durch (nicht gezeigte) Rückschlagventile bzw. Lasthalteventile gegen den Druck aus dem Hilfszweig 44 abgesichert, so dass es nicht zu einem Abfluss von Druckfluid aus der Hilfszweigleitung 44 zum Steuerventilblock 34 kommen kann.

Beim Starten des Kippvorgangs wird daher das von dem Kolben 48 aus der Zylinderkammer 52 des Druckübertragungszylinders 46 verdrängte Druckfluid ausreichen, um einen kleinen, begrenzten Kolbenhub der Kolben 58 der Zylinder-Kolben-Einheiten 10 zu verursachen. Dieser Kolbenhub reicht aus, um die Schwenkhalterungsarme 6 (vgl. Fig. 2a-2d) in die in Fig. 2b gezeigte Stellung zu verschwenken. Wie schon erwähnt, wird die Bordwandklappe 4 dabei so weit angehoben, dass sie aus ihrer Verriegelung freikommt. Beim Kippen des Kippaufbaus 2 kann die Bordwand 4 dann in der schon erläuterten Weise um die Pendelachse pendeln.

Soll die Bordwandklappe 4 dann in die Stellung gemäß Fig. 2d aus dem Ausschüttbereich 14 völlig herausgeklappt werden, so ist dies durch einen den Steuerventilblock 34 entsprechend einstellenden Bedienbefehl auszulösen, so dass nunmehr die Hydraulikfluidversorgung der Zylinder-Kolben-Einheiten 10 von der Pumpe 36 übernommen wird.

Beim Zurückschwenken der Schwenkhalterungsarme 6 von der Stellung gemäß Fig. 2d in die Stellung gemäß Fig. 2a steuert der Steuerventilblock 34 den Hydraulikfluidfluss so, dass die von den Kolbenstangen durchsetzten Zylinderkammern 61 nunmehr mit Druckfluid versorgt werden, wohingegen das Druckfluid aus den Zylinderkammern 54 über die Leitung 30 zum Tank 60 abfließen kann. Beim Zurückkippen des Kippaufbaus 2 in die Fahrbetriebsgrundstellung gemäß Fig. 2a gerät dann auch der Kolben 48 des Druckübertragungszylinders 46 in seinen Ausgangszustand mit eingezogener Kolbenstange 49 zurück. Um dies sicher zu gewährleisten, ist der Druckübertragungszylinder 46 in der in Fig. 2a gezeigten Weise am Fahrzeugrahmen so angeordnet, dass seine Kolbenstange 49 an ihrem aus dem Zylinderraum herausragenden Ende von dem sich in die Fahrbetriebsgrundstellung absenkenden Kippaufbau 2 in Eingriff genommen und mechanisch in die Ausgangsstellung gedrückt wird.

Mit dem Einziehen der Kolbenstangen der Kolben 58 der Zylinder-Kolben-Einheiten 10 werden die Schwenkhalterungsarme 6 wieder in die Ausgangsstellung gemäß Fig. 2a verschwenkt, wobei die Bordwandklappe 4 in ihre Schließstellung gelangt und verriegelt wird.

Den vorstehend genannten Erläuterungen ist somit zusammenfassend zu entnehmen, dass zur Bereitstellung des für den Entriegelungsvorgang erforderlichen Druckes Druckfluid aus dem hydraulischen Hilfskreis bzw. Hilfszweig 44 in dosierter Menge bereitgestellt wird und die weitere Schwenkbetätigung der Bordwandklappe 4 dann durch den Betrieb des hydraulischen Hauptkreises erfolgt, welcher die Pumpe 36, den Steuerventilblock 34, die betreffenden Druckfluidleitungen 30, 32 und den Tank 60 umfasst.

Der hydraulische Hilfskreis umfasst im Beispielsfall die Pumpe 42, die Zweigleitung 44 mit dem darin vorgesehenen Druckübertragungszylinder 46 sowie einen Rückleitungsweg 70 zum Tank, wobei dieser Rückleitungsweg ein normalerweise sperrendes Stellventil 72 enthält, welches vom Druck in der Leitung 30 gesteuert wird, derart, dass bei Druckzufuhr zu den Zylinderkammern 54 der Zylinder-Kolben-Einheiten 10 das Stellventil 72 auf Durchlass zum Tank 60 geschaltet wird. Es kann dann durch die Leitungen 32 und 70 das aus den Zylinderkammern 61 verdrängte Hydraulikfluid zum Tank 60 gelangen.

Als Hydraulikfluid kommt vorzugsweise Öl zum Einsatz.

Fig. 4 zeigt einen vereinfachten Hydraulikschaltplan für ein weiteres Ausführungsbeispiel der Erfindung. Soweit in Fig. 4 funktional oder gegenständlich gleiche Elemente wie in Fig. 3 dargestellt sind, so sind diese Elemente in beiden Figuren 3 und 4 jeweils mit denselben Bezugszeichen gekennzeichnet.

Im Unterschied zu der Ausführungsform nach Fig. 3 wird der Druckübertragungszylinder 46 in Fig. 4 von der Pumpe 36 versorgt, welche für den Schwenkbetrieb der Zylinder-Kolben-Einheiten 10 zuständig ist. Bei dem Ausführungsbeispiel nach Fig. 4 ist es erforderlich, dass der Druckübertragungszylinder 46 eine möglichst große hydraulische Übersetzung hat, um hinreichend große Kolbenstangenkräfte an den Zylinder-Kolben-Einheiten 10 zu erzeugen.

Zwischen dem Steuerventilblock 34 und der Pumpe 36 ist noch ein Stellventil 74 zur Steuerung des Druckfluidflusses von der Pumpe 36 zu dem Druckübertragungszylinder 46 bzw. vom Druckübertragungszylinder 46 zurück zum Tank 60 vorgesehen.

## Patentansprüche

1. Kippvorrichtung eines Kipperfahrzeugs, mit einem Kippaufbau (2) und einer hydraulischen Kippantriebseinrichtung (23) zum Schwenken des Kippaufbaus (2) um eine Kippachse (19), wobei der Kippaufbau (2) einen Rahmen (16) und daran wenigstens eine zum Schließen und Öffnen eines Ausschüttbereiches (14) des Kippaufbaus (2) um eine Schwenkachse (8) schwenkbare Bordwandklappe (4), insbesondere Heckwandklappe, und ferner eine die Bordwandklappe (4) in deren Schließstellung verriegelnde Verriegelungseinrichtung (18, 20) aufweist, wobei als Schwenkantriebsvorrichtung für die Bordwandklappe wenigstens eine hydraulische Zylinder-Kolben-Einheit (10) vorgesehen ist, mittels derer auch die Verriegelungseinrichtung (18, 20) betätigbar ist, um die Bordwandklappe (4) aus ihrer Verriegelung freizugeben, wobei die Zylinder-Kolben-Einheit (10) über eine Steuerventilanordnung (34) mit Druck aus einem der Bordwandklappenbetätigung zugeordneten hydraulischen Hauptkreis beaufschlagbar ist, um einen die Öffnungsbewegung der Bordwandklappe (4) auslösenden Kolbenhub der Zylinder-Kolben-Einheit (10) zu erzeugen,
**dadurch gekennzeichnet, dass** die Zylinder-Kolben-Einheit (10) über einen zumindest dem Entriegelungsvorgang der Verriegelungseinrichtung (18, 20) entsprechenden begrenzten Bereich ihres Kolbenhubs mit einem erhöhten Druck aus einem hydraulischen Hilfskreis bzw. Hilfszweig (44) beaufschlagbar ist.

2. Kippvorrichtung nach Anspruch 1, **gekennzeichnet durch** Steuerungsmittel, die dazu eingerichtet sind, mit dem Einleiten des Kippens des Kippaufbaus aus der Fahrbetriebsgrundstellung heraus automatisch den hydraulischen Hilfskreis bzw. Hilfszweig (44) zur Beaufschlagung der Zylinder-Kolben-Einheit (10) zu aktivieren.

3. Kippvorrichtung nach Anspruch 1 oder 2, **dadurch gekennzeichnet, dass** die Verriegelungseinrichtung (18, 20) wenigstens ein am Kippaufbaurahmen (16) in der Nähe des Ausschüttbereiches (14) befestigtes Verriegelungselement (18) aufweist, welches ein Verriegelungsgegenelement (20) der Bordwandklappe (4) in deren Schließstellung verriegelnd hintergreift, wobei die Verriegelung durch Anheben der Bordwandklappe (4) lösbar ist, und dass die Bordwandklappe (4) in der Nähe ihres in der Schließstellung oberen Endes an einer Schwenkhalterungsanordnung (6) angehängt ist, wobei die Schwenkhalterungsanordnung (6) ausgehend von einer mit der Schließstellung der Bordwandklappe (4) korrespondierenden Stellung mittels der Zylinder-Kolben-Einheit (10) um die Schwenkachse (8) schwenkbar ist, um die Bordwandklappe (4) aus ihrer Schließstellung heraus durch Anheben zu entriegeln und in eine Öffnungsstellung zu verschwenken.

4. Kippvorrichtung nach Anspruch 3, **dadurch gekennzeichnet, dass** die Zylinder-Kolben-Einheit (10) in einer Entriegelungsbetriebsart so ansteuerbar ist, dass sie im Wesentlichen nur den zur Entriegelung der Bordwandklappe (4) begrenzten Kolbenhub ausführt, und dass die auf diese Weise entriegelte Bordwandklappe (4) an der Schwenkhalterungsanordnung (6) um eine zur Kippachse (19) parallele Achse pendeln kann, wenn der Kippaufbau (2) in eine angehobene Kippstellung verschwenkt wird.

5. Kippvorrichtung nach einem der vorhergehenden Ansprüche, **dadurch gekennzeichnet, dass** der hydraulische Hilfskreis bzw. Hilfszweig (44) an der Druckseite einer Pumpe (42) zur hydraulischen Versorgung der Kippantriebseinrichtung (23) angeschlossen ist.

6. Kippvorrichtung nach einem der vorhergehenden Ansprüche, **dadurch gekennzeichnet, dass** der hydraulische Hilfskreis bzw. Hilfszweig (44) und der hydraulische Hauptkreis von unterschiedlichen Pumpen (36, 42) mit Druckfluid versorgt werden.

7. Kippvorrichtung nach einem der Ansprüche 1 bis 5, **dadurch gekennzeichnet, dass** der hydraulische Hilfskreis bzw. Hilfszweig und der hydraulische Hauptkreis von derselben Pumpe (36, Fig. 4) mit Druckfluid versorgt werden.

8. Kippvorrichtung nach einem der vorhergehenden Ansprüche, **dadurch gekennzeichnet, dass** der hydraulische Hilfskreis bzw. Hilfszweig (44) einen insbesondere hydraulisch übersetzenden Druckübertragungszylinder (46) enthält.

9. Kippvorrichtung nach Anspruch 8, **dadurch gekennzeichnet, dass** der Druckübertragungszylinder (46) innen von einem einseitig eine Kolbenstange (49) aufweisenden Kolben (48) in zwei Zylinderkammern (50, 52) unterteilt ist, wobei die von der Kolbenstange (49) durchsetzte Zylinderkammer (52) hydraulisch mit der Zylinder-Kolben-Einheit (10) für die Entriegelung und für den Schwenkantrieb der Bordwandklappe (4) in Verbindung steht, wohingegen die andere Zylinderkammer (50) ggf. über eine Ventilanordnung an einer Druckfluid fördernden Pumpe (42) angeschlossen ist, und wobei der Druckübertragungszylinder (46) so dimensioniert ist, dass die von ihm bei einem vollständigen Maximalhub seines Kolbens (48) zu der Zylinder-Kolben-Einheit (10) verdrängte Druckfluidmenge ausreicht, um bei der Zylinder-Kolben-Einheit (10) einen im Wesentlichen auf den Entriegelungsvorgang der Verriegelungseinrichtung (18, 20) begrenzten Kolbenhub zu verursachen.

10. Kippvorrichtung nach Anspruch 9, **dadurch gekennzeichnet, dass** der Druckübertragungszylinder (46) so an einem Fahrzeugrahmenteil oder dazu ortsfest angeordnet ist, dass er mechanisch von dem Kippaufbau (2) in Eingriff genommen werden kann, um die Kolbenstange (49) in die eingezogene Grundstellung im Druckübertragungszylinder zu überführen, wenn der Kippaufbau (2) aus einer angehobenen Kippstellung in die Fahrbetriebsgrundstellung übergeht.

## Claims

1. A tipping apparatus of a tipper vehicle, with a tipping body (2) and a hydraulic tipping-drive device (23) for pivoting the tipping body (2) about a tipping axis (19), wherein the tipping body (2) has a frame (16) and thereon at least one tailgate flap (4), in particular a rear wall flap, for closing and opening a discharge section (14) of the tipping body (2) and which is pivotable about a pivot axis (8), and it also has a locking device (18,20) for locking the tailgate flap (4) in its closed position, wherein at least one hydraulic cylinder-piston unit (10) is provided as the pivoting-drive device for the tailgate flap, by means of which hydraulic cylinder-piston unit the locking device (18,20) can also be actuated so as to release the tailgate flap (4) from its locked condition, wherein pressure from a hydraulic primary circuit associated with the actuation of the tailgate flap (4) can be applied to the cylinder-piston unit (10) via a control valve assembly (34) so as to bring about the piston stroke of the cylinder-piston unit (10) triggering the opening movement of the tailgate flap (4),
**characterised in that** increased pressure from a hydraulic secondary circuit or secondary branch (44) can be applied to the cylinder-piston unit (10) over a limited portion of its piston stroke corresponding at least to the release operation of the locking device (18,20).

2. A tipping apparatus according to Claim 1, **characterised by** control means which, with the onset of the tipping of the tipper body from the normal travel position, are set up to activate automatically the hydraulic second circuit or secondary branch (44) so as to actuate the cylinder-piston unit (10).

3. A tipping apparatus according to Claim 1 or 2,
**characterised in that** the locking device (18,20) has at least one locking element (18) which is fastened to the tipping body frame (16) in the vicinity of the discharge section (14) and which engages behind a locking counterpart (20) of the tailgate flap (4) in its locking position, wherein the locking can be released by lifting the tailgate flap (4), and **in that** in the vicinity of its upper end in the closed position the tailgate flap (4) is attached to a pivot mounting assembly (6), wherein, starting from a position corresponding to the closed position of the tailgate flap (4), the pivot mounting assembly (6) can be pivoted by means of the cylinder-piston unit (10) about the pivot axis (8) so to release the tailgate flap (4) from its closed position by lifting and to pivot it into an open position.

4. A tipping apparatus according to Claim 3, **characterised in that** the cylinder-piston unit (10) can be activated in a release mode so that essentially it carries out only the limited piston stroke for releasing the tailgate flap (4), and **in that** the tailgate flap (4) released in this way can swing on the pivot mounting assembly (6) about an axis parallel to the tipping axis (19) when the tipping body (2) is pivoted into a raised tipping position.

5. A tipping apparatus according to any one of the preceding Claims, **characterised in that** the hydraulic secondary circuit or secondary branch (44) is connected to the output side of a pump (42) for the hydraulic supply of the tipping-drive device (23).

6. A tipping apparatus according to any one of the preceding Claims, **characterised in that** the hydraulic secondary circuit or secondary branch (44) and the hydraulic primary circuit is supplied with pressure fluid by different pumps (36,42).

7. A tipping apparatus according to any one of Claims 1 to 5, **characterised in that** the hydraulic secondary circuit or secondary branch and the hydraulic primary circuit is supplied with pressure fluid by the same pump (36, Fig. 4).

8. A tipping apparatus according to any one of the preceding Claims, **characterised in that** the hydraulic secondary circuit or secondary branch (44) includes, in particular, a hydraulically converting pressure-transmitting cylinder (46).

9. A tipping apparatus according to Claim 8, **characterised in that** the pressure-transmitting cylinder (46) is divided internally into two cylinder chambers (50,52) by a piston (48) having a piston rod (49) at one end, wherein the cylinder chamber (52) traversed by the piston rod (49) is communicated hydraulically with the cylinder-piston unit (10) for the release and for the pivoting drive of the tailgate flap (4), whereas the other cylinder chamber (50) is connected optionally via a valve assembly to a pump (42) delivering pressure fluid, and wherein the pressure-transmitting cylinder (46) is of such dimensions that the quantity of pressure fluid displaced by it in one complete maximum stroke of its piston (48) towards the cylinder-piston unit (10) is sufficient to induce in the cylinder-piston unit (10) a piston stroke substantially limited to the release operation of the locking mechanism (18,20).

10. A tipping apparatus according to Claim 9, **characterised in that** the pressure-transmitting cylinder (46) is so arranged on a vehicle frame part or is fixed with respect thereto that it can be engaged mechanically by the tipping body so as to transfer the piston rod (49) into the normal retracted position in the pressure-transmitting cylinder when the tipping body (2) passes from a raised tipping position into the normal travel position.

## Revendications

1. Dispositif basculant d'un véhicule à benne basculante, avec une structure basculante (2) et un dispositif d'entraînement basculant hydraulique (23) pour faire pivoter la structure basculante (2) autour d'un axe de basculement (19), dans lequel la structure basculante (2) présente un cadre (16) et, sur celui-ci, au moins un volet latéral (4), en particulier un volet arrière, pouvant pivoter autour d'un axe de pivotement (8) pour fermer et ouvrir une zone de versement (14) de la structure basculante (2), ainsi qu'un dispositif de verrouillage (18, 20) verrouillant le volet latéral (4) dans sa position de fermeture, dans lequel au moins une unité à piston et cylindre hydraulique (10) est prévue comme dispositif d'entraînement pivotant pour le volet latéral, unité au moyen de laquelle le dispositif de verrouillage (18, 20) peut également être actionné pour libérer le volet latéral (4) de son verrouillage, dans lequel l'unité à piston et cylindre (10) peut être sollicitée, par l'intermédiaire d'un système (34) de vanne de commande, avec une pression provenant d'un circuit hydraulique principal associé à l'actionnement de volet latéral, afin de produire une course de piston de l'unité à piston et cylindre (10) qui déclenche le mouvement d'ouverture du volet de latéral (4),
**caractérisé en ce que** l'unité à piston et cylindre (10) peut être sollicitée, sur une zone limitée de sa course de piston correspondant au moins à l'opération de déverrouillage de son dispositif de verrouillage (18, 20), avec une pression accrue depuis un circuit hydraulique auxiliaire ou une branche auxiliaire (44).

2. Dispositif basculant selon la revendication 1, **caractérisé par** des moyens de commande qui sont agencés pour, à lamorce du basculement de la structure basculante depuis la position de base de déplacement, activer automatiquement le circuit auxiliaire hydraulique ou la branche auxiliaire (44) pour solliciter l'unité à piston et cylindre (10).

3. Dispositif basculant selon la revendication 1 ou 2, **caractérisé en ce que** le dispositif de verrouillage (18, 20) présente au moins un élément de verrouillage (18) fixé sur le cadre (16) de la structure basculante au voisinage de la zone de déversement (14), élément qui saisit par l'arrière avec effet de verrouillage un contre-élément de verrouillage (20) du volet latéral (4) dans sa position de fermeture, le verrouillage pouvant être levé en soulevant le volet latéral (4), et **en ce que** le volet latéral (4) est accroché à un système de support pivotant (6) au voisinage de son extrémité supérieure dans la position de fermeture, le système de support pivotant (6) pouvant pivoter autour de l'axe de pivotement (8) depuis une position correspondant à la position de fermeture du volet latéral (4) au moyen de l'unité à piston et cylindre (10), afin de déverrouiller le volet latéral (4) depuis sa position de fermeture par soulèvement et de le faire pivoter jusqu'à une position d'ouverture.

4. Dispositif basculant selon la revendication 3, **caractérisé en ce que** l'unité à piston et cylindre (10) peut être commandée dans un mode de déverrouillage de telle manière qu'elle n'exécute pour l'essentiel que la course limitée de piston nécessaire au déverrouillage du volet latéral (4), et **en ce que** le volet latéral (4) ainsi déverrouillé peut aller et venir sur le système de support pivotant (6) autour d'un axe parallèle à l'axe de basculement (19) quand la structure pivotante (2) est pivotée jusqu'à une position de basculement soulevée.

5. Dispositif basculant selon l'une des revendications précédentes, **caractérisé en ce que** le circuit auxiliaire hydraulique ou la branche auxiliaire (44) est raccordé(e) au côté pression d'une pompe (42) pour l'alimentation hydraulique du dispositif d'entraînement basculant (23).

6. Dispositif basculant selon l'une des revendications précédentes, **caractérisé en ce que** le circuit auxiliaire hydraulique ou la branche auxiliaire (44) et le circuit hydraulique principal sont alimentés en fluide sous pression depuis des pompes (36, 42) différentes.

7. Dispositif basculant selon l'une des revendications 1 à 5, **caractérisé en ce que** le circuit auxiliaire hydraulique ou la branche auxiliaire et le circuit hydraulique principal sont alimentés en fluide sous pression depuis la même pompe (36, fig. 4).

8. Dispositif basculant selon l'une des revendications précédentes, **caractérisé en ce que** le circuit auxiliaire hydraulique ou la branche auxiliaire (44) contient un cylindre de transfert de pression (46), en particulier à amplification hydraulique.

9. Dispositif basculant selon la revendication 8, **caractérisé en ce que** le cylindre de transfert de pression (46) est subdivisé intérieurement en deux chambres de cylindre (50, 52) par un piston (48) présentant d'un côté une tige de piston (49), la chambre de cylindre (52) traversée par la tige de piston (49) communiquant hydrauliquement avec l'unité à piston et cylindre (10) pour le déverrouillage et pour l'entraînement pivotant du volet latéral (4), tandis que l'autre chambre de cylindre (50) est raccordée éventuellement par l'intermédiaire d'un système de vanne à une pompe (42) envoyant un fluide sous pression, et le cylindre de transfert de pression (46) étant dimensionné en sorte que la quantité de fluide sous pression acheminée lors d'une course maximale complète de son piston (48) en direction de l'unité à piston et cylindre (10) est suffisante pour provoquer, au niveau de l'unité à piston et cylindre (10), une course de piston limitée essentiellement à l'opération de déverrouillage du dispositif de déverrouillage (18, 20).

10. Dispositif basculant selon la revendication 9, **caractérisé en ce que** le cylindre de transfert de pression (46) est monté stationnaire sur une partie de châssis de véhicule, de telle manière qu'il peut être sollicitée mécaniquement par la structure basculante (2) afin de faire passer la tige de piston (49) dans la position de base rentrée dans le cylindre de transfert de pression quand la structure basculante (2) passe d'une position de basculement soulevée à la position de base pour le déplacement du véhicule.
